# EUROPEAN PATENT APPLICATION

(11) **EP 2 109 057 A2**
(43) Date of publication of application: **14.10.2009**
(21) Application number: 09157637.1
(22) Date of filing: 08.04.2009
(51) Int. Cl.: G06F 21/00

(54) **Application packaging device and method for controlling the same**

(30) Priority: 09.04.2008 JP 2008101530
(71) Applicant: Canon Kabushiki Kaisha, Tokyo 146-8501 (JP)
(72) Inventor: Matsugashita, Hayato, Tokyo (JP)
(74) Representative: Williamson, Brian

(57) **Abstract**

End user license agreements (321) included in a plurality of encrypted applications (3) are extracted from the applications (3). In this way, acceptances of the end user license agreements (321) are obtained from a user without waiting completion of decryption of the plurality of encrypted applications (3).

## Description

### BACKGROUND OF THE INVENTION

### Field of the Invention

The present invention relates to an application packaging device which packages a plurality of applications and a method for controlling the application packaging device.

### Description of the Related Art

In recent years, the concept of a "license" has been employed in order to prevent applications from being illegally used. In general, a single license is assigned to a single application, and the application can be installed by inputting details of the assigned license as an initial part of the application installation process.

Furthermore, a method for creating an archive including a plurality of applications so that the plurality of applications are simultaneously installed as an application package is known.

However, in the process of installing the application package, including the plurality of applications to which licenses are assigned, is complicated as each license should be input for individual installation of each of the applications.

To address this problem, in Japanese Patent Laid-Open No. 2006-163896, a method for adding, to each of a plurality of licenses, license data specifying a plurality of applications included in an application package and data which proves the validity of the license data for each application package collectively has been proposed. With this method, when the application package including the applications to which the licenses are assigned is installed, the process of inputting a license is performed only once.

With the method disclosed in Japanese Patent Laid-Open No. 2006-163896, the process of installing the application package is easily performed since the license is input only once in a first stage of the process of installing the application package. However, in addition to the license, other items should be input in the installation process.

For example, an EULA (End User License Agreement) has been generally used. This is an agreement in which detailed licensing information, which is to be agreed before installation is written. To continue the installation process, the user should accept the end user license agreement.

Furthermore, installation requirements unique for each application (such as a version of a platform which allows an application to be installed and a minimum-required resource) may be set. In this case, a notification that the application cannot be installed since the application does not satisfy the installation requirements or a notification that the installation process is continued may be transmitted.

In the method disclosed in Japanese Patent Laid-Open No. 2006-163896, the application package merely includes the plurality of applications packaged therein and the installation process is performed for each application. Therefore, when the installation process is started, for each application, a notification that the application does not satisfy the installation requirements may be transmitted, an input operation performed for determining whether the installation is to be continued may be required, or an input operation performed for accepting an end user license agreement may be required. As a result, there is a possibility that the installation process becomes complicated. For example, there is a possibility that a considerable number of inquiries may be transmitted to the user during the installation process.

The problem of slow and complex installation of software from a multi-application package is increased if, as is presently the case, each application has to be opened individually and the end user license agreement therein accepted by the user during the installation process. This not only increases the time taken for installation, but it requires the user to be present for the whole installation process, as acceptance of each individual license for each application is only possible as that application is decrypted and the user will not know in advance when that will occur. Therefore, the user cannot simply set an application package to install, accept the end user licenses therefore and then leave the device to install the software without periodic intervention. This makes installation much more time consuming and complex for users.

### SUMMARY OF THE INVENTION

The present invention provides an application packaging device including a decrypting unit configured to individually decrypt a plurality of applications, a copying unit configured to copy end user license agreements included in the decrypted applications, and a packaging unit configured to package the copies of the end user license agreements and the applications which have not yet been decrypted.

According to a first aspect of the present invention there is provided an application packaging device as claimed in claim 1.

According to a second aspect of the present invention there is provided a device as specified in claim 6.

According to a third aspect of the present invention there is provided a method as specified in claim 8. According to a further aspect of the present invention there is provided a application packaging device comprising: a decrypting unit configured to individually decrypt a plurality of applications; and an application package generator configured to generate an application package in which end user license agreements of the decrypted applications are included in a region of the application package distinct from region including the encrypted applications.

According to a still further aspect of the present invention there is provided a device comprising: obtaining means configured to obtain an application package definition from a region of an application package generated by the application packaging device as described above before a plurality of encrypted applications included in the application package are decrypted, the region being different from regions including the encrypted applications; and determination means configured to determine whether all the applications included in the application package are installable in accordance with the obtained application package definition.

Further features of the present invention will become apparent from the following description of exemplary embodiments with reference to the attached drawings.

### BRIEF DESCRIPTION OF THE DRAWINGS

Fig. 1 is a block diagram illustrating an image forming apparatus according to an exemplary embodiment of the present invention.

Fig. 2 is a block diagram illustrating a configuration of a packaging device according to the first exemplary embodiment of the present invention.

Fig. 3 is a block diagram illustrating a configuration of an application according to the first exemplary embodiment of the present invention.

Fig. 4 shows a list illustrating a configuration of the application definition according to the first exemplary embodiment of the present invention.

Fig. 5 is a block diagram illustrating a configuration of a license according to the first exemplary embodiment of the present invention.

Fig. 6 is a block diagram illustrating a configuration of an application package 6 according to the first exemplary embodiment of the present invention.

Fig. 7 is a block diagram illustrating a configuration of a package license according to the first exemplary embodiment of the present invention.

Fig. 8 is a flowchart illustrating the application package generation process.

Figs. 9A and 9B show a flowchart illustrating the installation process.

Fig. 10 shows a list illustrating a configuration of an installation management table.

Fig. 11 is a block diagram illustrating a configuration of an application package according to a second exemplary embodiment of the present invention.

Fig. 12 shows a list illustrating a configuration of an application package definition according to the second exemplary embodiment of the present invention.

Fig. 13 shows a package license.

Fig. 14 is a flowchart illustrating the application package generation process.

Fig. 15 is a flowchart illustrating the installation process.

### DESCRIPTION OF THE EMBODIMENTS

### First Exemplary Embodiment

### Image Forming Apparatus 1

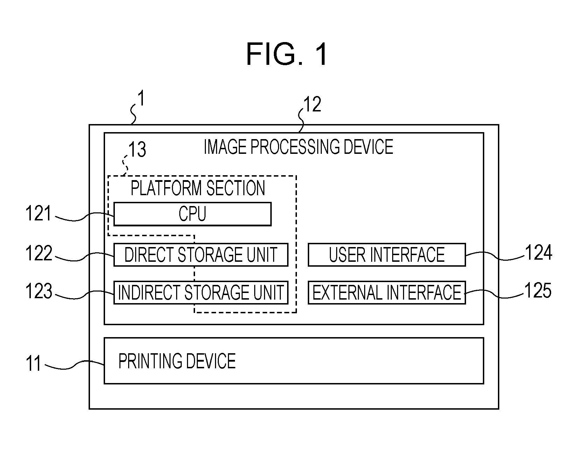

Fig. 1 is a block diagram illustrating an image forming apparatus 1 according to a first exemplary embodiment of the present invention.

The image forming apparatus 1 includes a printing device 11 and an image processing device 12.

The image processing device 12 includes a CPU 121, a direct storage unit 122 (a RAM (Random Access Memory), for example), an indirect storage unit 123 (a ROM (Read-Only Memory) or an HDD (Hard Disk Drive), for example), a user interface 124, and an external interface 125.

The direct storage unit 122 directly transmits data to or receives data from the CPU 121. The indirect storage unit 123 transmits data to or receives data from the CPU 121 through the direct storage unit 122.

The direct storage unit 122 stores various application programs and platform programs.

The user interface 124 includes a keyboard, a mouse, and a display, and is capable of accepting an instruction input by a user and displaying data (screen data).

The external interface 125 is used to receive data from or transmit data to an external device. Examples of the external device include an external storage device, such as an external HDD or an external USB memory, and a device separately provided, such as a host computer which is connected through a network or an image forming apparatus.

### Platform section 13

The CPU 121 performs a certain operation so that the platform programs stored in the indirect storage unit 123 are transferred to (or stored in) the direct storage unit 122. After the transfer, the CPU 121 is brought to a state in which the CPU 121 is available to execute the platform programs.

In this exemplary embodiment, the state in which the CPU 121 is available to execute the platform programs is referred to as a state in which a platform section 13 is activated.

Note that a unit having a configuration including the following components is referred to as the platform section 13 in this exemplary embodiment: the CPU 121; a region of a portion of the direct storage unit 122, which stores the platform programs; a region (which includes a portion of the direct storage unit 122 and a portion of the indirect storage unit 123) which stores information (such as a calculation result) obtained when the CPU 121 processes the platform programs.

### Application Program

The platform section 13 transfers (stores) a first application program among the application programs stored in the indirect storage unit 123 to the direct storage unit 122. After a completion of the transfer, the platform section 13 is brought to a state in which the platform section 13 is ready to execute the first application program. This operation is referred to as an operation of activating the first application program performed by the platform section 13 in this exemplary embodiment.

On the other hand, the platform section 13 can delete the first application program from the direct storage unit 122. This operation is referred to as an operation of interrupting the first application program performed by the platform section 13 in this exemplary embodiment.

The platform section 13 receives data representing the first application program through the external interface 125 and stores the data therein. Here, the platform section 13 stores information on a presence of the first application program and brings the first application program under its control. This operation is referred to as an operation of installing the first application program in the platform section 13 in this exemplary embodiment.

On the other hand, the platform section 13 can delete the first application program from the indirect storage unit 123 included in the platform section 13. This operation is referred to as an operation of uninstalling the first application program performed by the platform section 13 in this exemplary embodiment. Note that in a case where the first application program has been in an active state when the platform section 13 intends to uninstall the first application program, the operation of uninstalling the first application program is performed after the first application program is stopped.

Although the foregoing description has been made taking the first application program as an example, it is apparent for those skilled in the art that the same results are obtained when the other application programs (a second application program, for example) are employed.

### Packaging Device (Application Packaging Device) 2

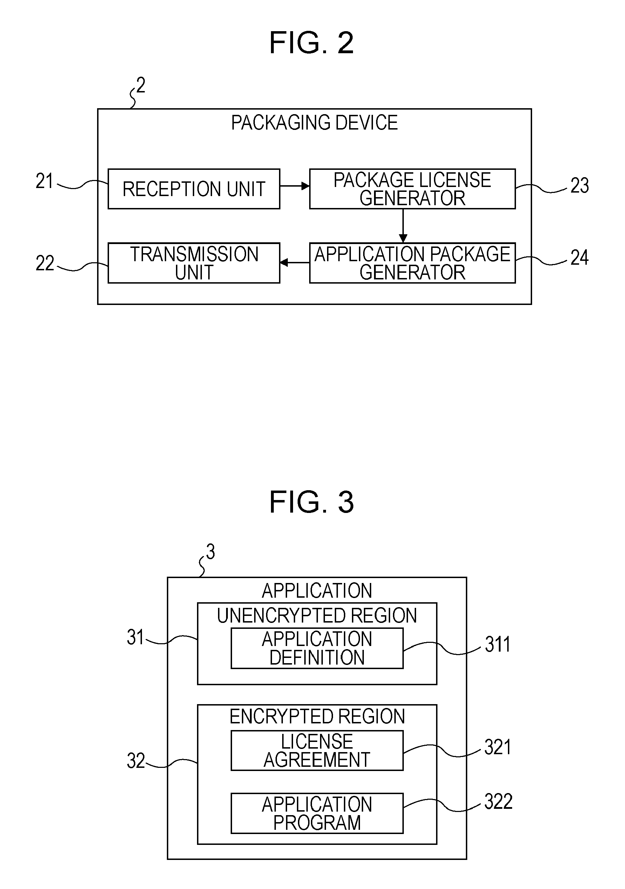

Fig. 2 is a block diagram illustrating a configuration of a packaging device 2 according to the first exemplary embodiment of the present invention.

The packaging device 2 includes a reception unit 21, a transmission unit 22, a package license generator 23, and an application package generator 24. Note that the package license generator 23 and the application package generator 24 are described in detail hereinafter.

The packaging device 2 corresponds to a computer such as a personal computer or a work station. The computer includes a CPU, a main storage unit, an external storage unit, and an external interface as a main configuration. The external storage unit stores an operating system (OS) and various programs. The main storage unit stores the OS read from the external storage device and various programs which are to be executed by the CPU.

Note that the various programs include a packaging program in this exemplary embodiment. In accordance with content of the packaging program, the packaging device 2 realizes the units described above.

### Application 3

Fig. 3 is a block diagram illustrating a configuration of an application 3 according to the first exemplary embodiment of the present invention.

The application 3 includes an unencrypted region 31 and an encrypted region 32. The unencrypted region 31 includes a special directly (named "MANIFEST") which stores an application definition 311 which will be described hereinafter. The encrypted region 32 also includes a special directly (named "EULA") which stores an end user license agreement 321 which will be described later and an application program 322 which is similar to the application programs described above.

The encrypted region 32 should be configured so as to be decrypted only when a license, which will be described hereinafter, is valid, and any encryption method may be used. That is, the valid license includes information (a key, for example) used to decrypt the encrypted region.

### Application Definition 311

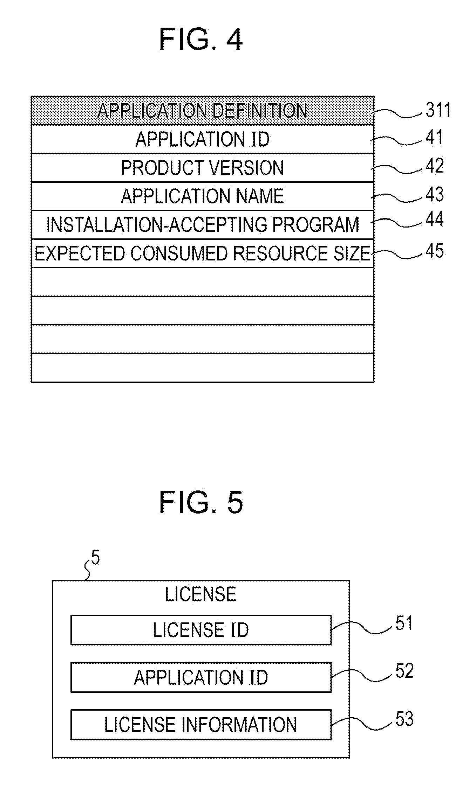

Fig. 4 shows a list illustrating a configuration of the application definition 311 according to the first exemplary embodiment of the present invention.

The application definition 311 includes an application ID 41, a product version 42, an application name 43, an installation-accepting platform 44, and an expected consumed resource size 45. The application ID 41 is an identifier used to uniquely identify the application 3 among a plurality of applications. When the product version 42 is used in combination with the application ID 41, a version of the application 3 can be specified. The application name 43 is a character string representing an application name.

The installation-accepting platform 44 represents a platform program which accepts an installation of the application 3. The installation-accepting platform 44 represents a type and a version of a platform program, a unique ID of a device, and a function which should be included in the platform program.

In the expected consumed resource size 45, a resource size required when the application 3 is installed or after the application 3 is installed is defined. Examples of the expected consumed resource size 45 include a size of a region of the indirect storage unit 123 to be consumed and a size of a region of the direct storage unit 122 to be consumed.

### License 5

Fig. 5 is a block diagram illustrating a configuration of a license 5 according to the first exemplary embodiment of the present invention.

The license 5 includes a license ID 51, an application ID 52, and license information 53.

The license ID 51 is an unique ID used to identify the license 5. The application ID 52 stores information on the application ID 41 of the application 3 to which the license 5 has been assigned. The license information 53 stores a license definition of the license 5 (for example, an expiration date of the license 5 and the number of times in which the license 5 can be assigned), and information used to decrypt the encrypted region 32 of the application 3.

### Application Package 6

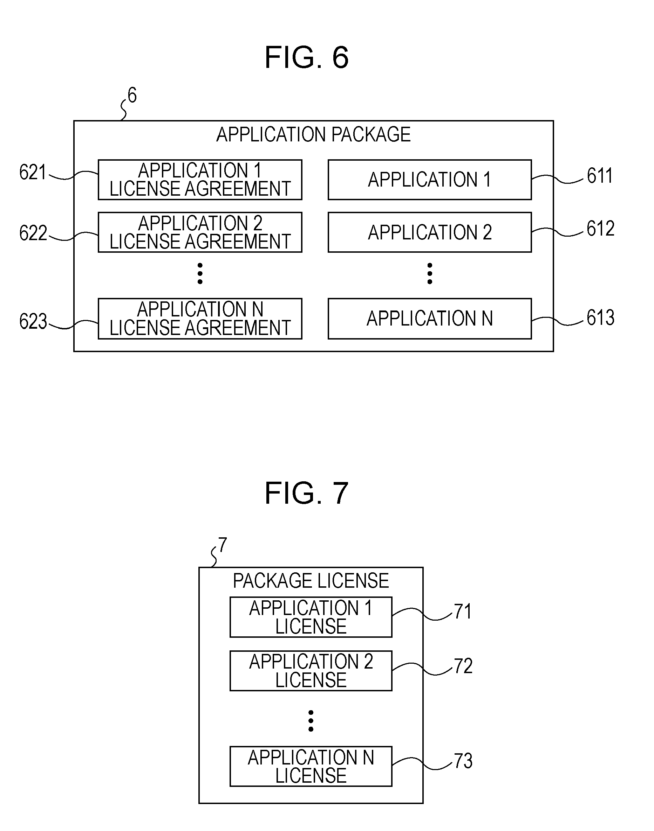

Fig. 6 is a block diagram illustrating a configuration of an application package 6 according to the first exemplary embodiment of the present invention.

The application package 6 is generated by the application package generator 24, which will be described hereinafter. The application package 6 includes a plurality of applications 611 to 613 and a plurality of end user license agreements 621 to 623 for the applications 611 to 613.

The process of generating the application package 6 performed by the application package generator 24 will be described hereinafter.

### Package License 7

Fig. 7 is a block diagram illustrating a configuration of a package license 7 according to the first exemplary embodiment of the present invention.

The package license 7 is obtained by packaging a plurality of licenses (71, 72, and 73, for example) generated using the package license generator 23. The package license 7 includes the plurality of licenses 71 to 73.

### The process of Generating Application Package 6

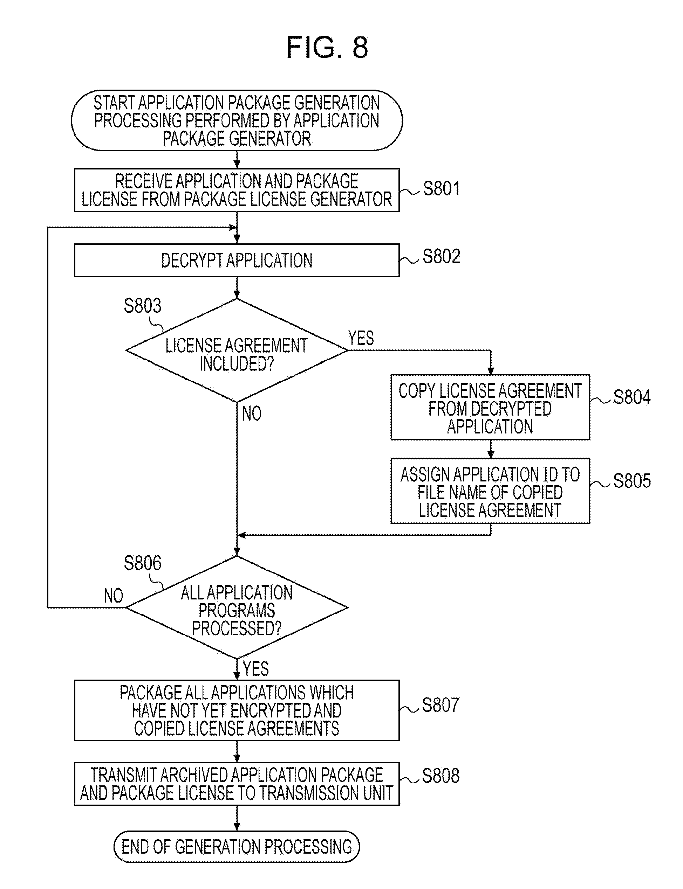

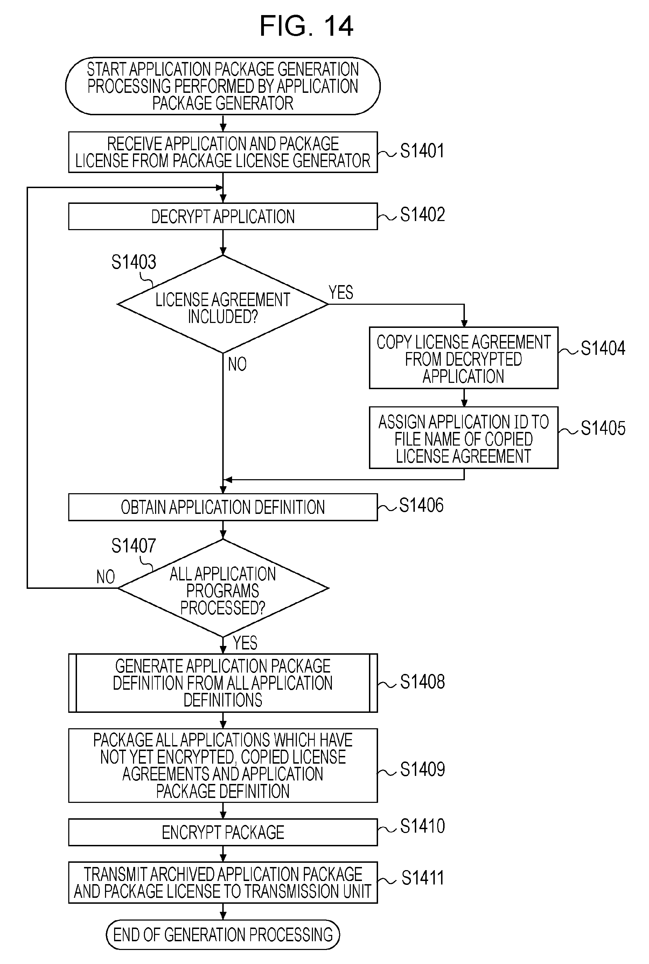

Referring now to a flowchart of Fig. 8, the process of generating the application package 6 (step S802 to step S807) performed by the application package generator 24 and operations in step S801 and step S808 will be described. Note that, in this exemplary embodiment, all operations in step S802 to step S807 are automatically performed, and an instruction input by a user is not accepted. Specifically, an instruction input by a user is not accepted while a decryption operation in step S802 to an operation of obtaining a collective application package in step S807 are performed. This fact is also applied to a second exemplary embodiment (that is, all operations in step S1402 to step S1410 of Fig. 14 are automatically performed).

The application package generator 24 receives a plurality of such applications 3 which are to be packaged from the package license generator 23. In addition, the application package generator 24 receives the package license 7 including a plurality of such licenses 5 corresponding to the applications 3 in step S801.

In step S802, the application package generator 24 decrypts each of the received applications 3.

Then, the application package generator 24 selects one of the decrypted applications 3, and determines whether the selected application 3 includes the end user license agreement 321 in step S803. When the determination is affirmative, the process proceeds to step S804. Note that the end user license agreement 321 is stored in the special directory (such as a directory named "EULA") in the application 3, and therefore, the determination as to whether the selected application 3 includes the end user license agreement 321 is executed by searching the special directory for the end user license agreement 321 using the application package generator 24. A style of a file name of the end user license agreement 321 is preferably determined.

Then, the application package generator 24 copies the end user license agreement 321 included in the decrypted application 3 in step S804. The application package generator 24 assigns the application ID 41 serving as an identifier used to uniquely specify the end user license agreement 321 to the file name of a copy of the end user license agreement 321 in step S805. The assigned application ID 41 is used to specify the original application 3. Furthermore, the application 3 may include a plurality of such end user license agreements 321 (for example, in a case where the application 3 is compatible with various languages). In this case, all the end user license agreements 321 are copied, and IDs are assigned to all copies of the end user license agreements 321.

After performing the operations described above on all the applications 3 received in step S801, the application package generator 24 performs an operation described below in step S807. That is, all the applications 3 which have not yet been subjected to the decryption operation in step S802 and the copies of the plurality of end user license agreements 321 which were obtained in step S804 and to which the IDs were assigned in step S805 are packaged. In this way, the application package 6 is generated.

Then, the application package generator 24 transmits the generated application package 6 and the package license 7 to the transmission unit 22.

Note that, in step S802 and step S807, the application package generator 24 extracts the end user license agreements 321 from the corresponding encrypted applications 3. Then, the application package 6 including the extracted end user license agreements 321 and the applications 3 is obtained.

In other words, in step S802 to step S807, the application package generator 24 generates the application package 6 including the end user license agreements 321 from the encrypted applications 3 in regions, which are different from regions including the applications 3 which have not yet been decrypted.

### Installation Management Table 10

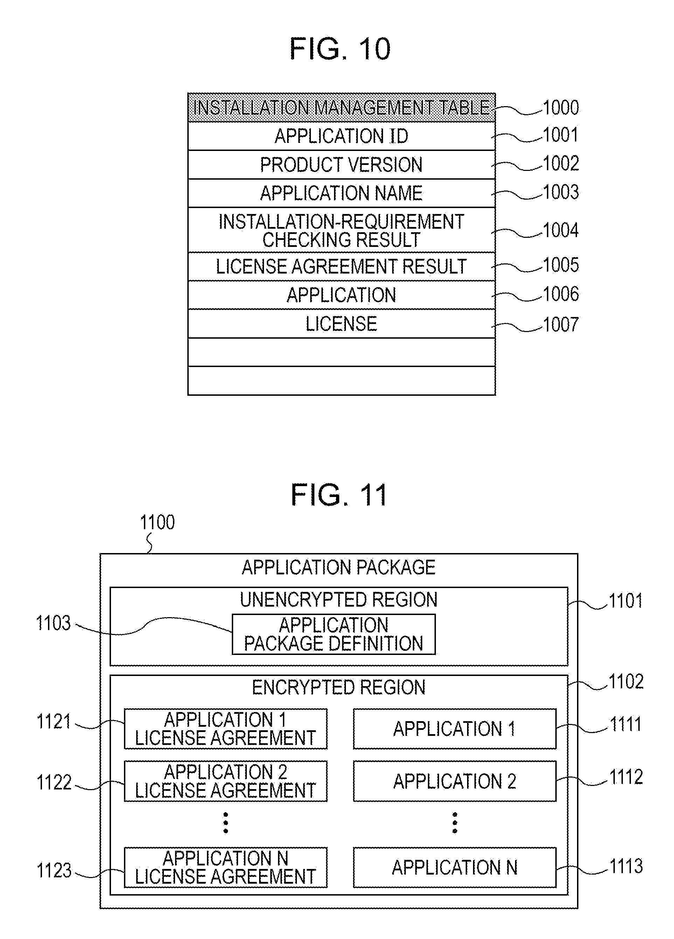

Fig. 10 shows a list illustrating a configuration of an installation management table 1000.

The installation management table 1000 is used when the platform section 13 performs installation processing, and is discarded after the installation process is completed. The installation management table 1000 includes an application ID 1001, a product version 1002, and an application name 1003, which are set in accordance with the application definition 311 of each of the applications 3. The installation management table 1000 further includes an installation-requirement checking result 1004, and a license agreement result 1005, which will be described in detail hereinafter.

The installation management table 1000 further includes an application 1006 and a license 1007 which are used to refer to the licenses 5 corresponding to the applications 3.

### The process of Installing Application Package 6

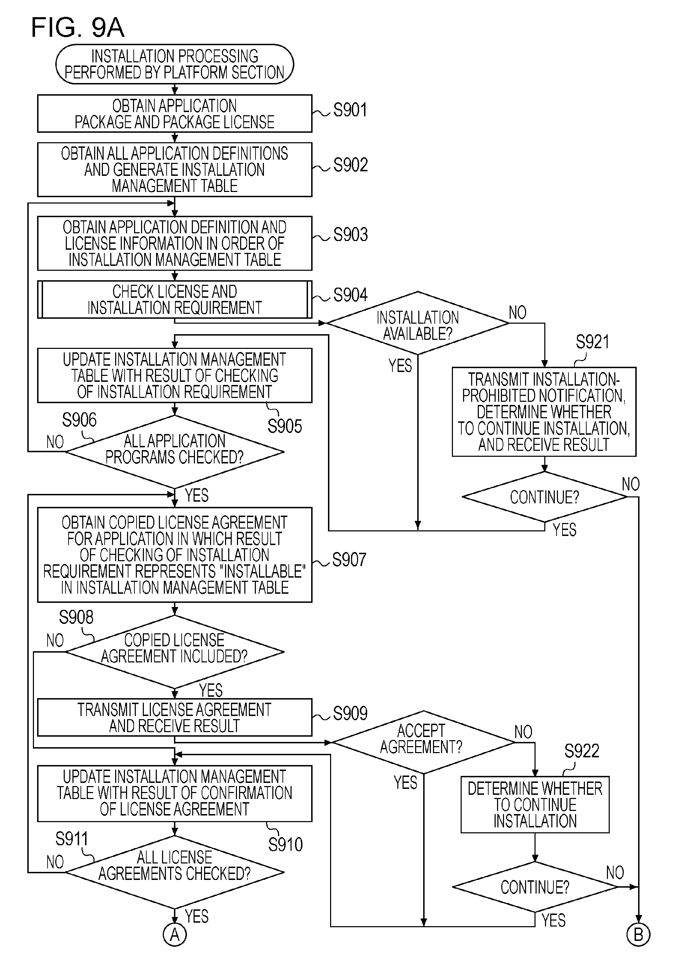

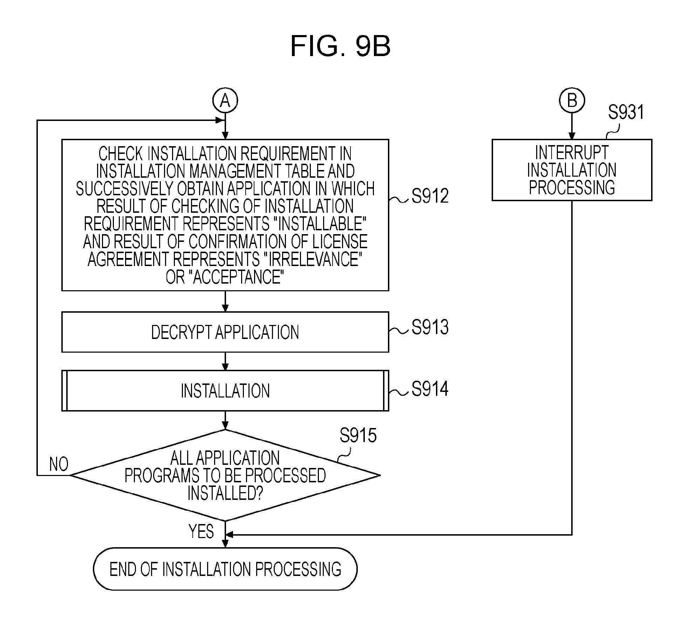

The process of installing the application package 6 performed by the platform section 13 will now be described with reference to a flowchart of Figs. 9A and 9B.

Note that, in this exemplary embodiment, the installation process includes the installation of application programs and processing performed along with the installation. Specifically, an operation of step S901 to an operation of step S915 are included in the installation process, and more specifically, the installation is performed in step S914. That is, the installation of the application programs is performed in the process of installing applications performed in step S901 to step S915.

The platform section 13 receives the application package 6 and the package license 7 from the external interface 125 in step S901. In other words, the platform section 13 receives the application package 6 and the package license 7 through the external interface 125. It is apparent that the platform section 13 simultaneously receives an instruction issued by a user who uses a device connected through the external interface 125, the instruction representing a request for the performance of the process of installing the application package 6.

Then, the platform section 13 performs the process as described below in step S902. The platform section 13 receives a plurality of application definitions 311, similar to the application definition 311 described above, corresponding to all the applications 3 included in the application package 6. The platform section 13 obtains the licenses 5 corresponding to the applications 3 from the received package license 7. Then, the platform section 13 generates the installation management table 1000 in accordance with information such as the applications 3, the application definitions 311, and the licenses 5. Specifically, the platform section 13 generates the installation management table 1000 which stores information (information on the application definitions 311 and information on the licenses 5) other than the installation-requirement checking result 1004 and the license agreement result 1005 to be included in the installation management table 1000.

The platform section 13 performs operations described below in an order of registration in the installation management table 1000.

First, the platform section 13 receives one of the application definitions 311 from the unencrypted region 31 included in a corresponding one of the applications 3 to be processed and the license information 53 from one of the obtained licenses 5 in step S903. Then, the platform section 13 performs the process of checking the license 5 and the installation requirements in accordance with information such as the application definition 311 and the license information 53 in step S904. As results of this process, when it is determined that the installation is acceptable, the installation-requirement checking result 1004 included in the installation management table 1000 is updated with information representing that the installation is acceptable in step S905. On the other hand, when a result of the process of checking the installation requirements represents that the installation is not acceptable, the platform section 13 notifies the external interface 125 of information representing that the installation is not acceptable, and requests an instruction from the user through the external interface 125 in step S921. Thereafter, the platform section 13 checks the instruction input by the user transmitted through the external interface 125 (that is, the platform section 13 determines whether the installation process is to be continued) in step S921. When it is determined that the installation process is to be continued (that is, when it is determined that the instruction represents continuation of the installation process), the platform section 13 updates the installation-requirement checking result 1004 included in the installation management table 1000 with the information representing that the installation is not acceptable in step S905. On the other hand, when it is determined that the installation process is not to be continued (that is, when it is determined that the instruction represents interruption of the installation process), the installation process is interrupted in step S931.

The platform section 13 repeatedly performs the operations described above in step S906 until all the applications 3 registered in the installation management table 1000 are processed.

Subsequently, the platform section 13 performs operations described below on only applications 3, among the applications 3, which correspond to the information representing that the installation is acceptable.

The platform section 13 determines whether the application package 6 stores a copy of the end user license agreement 321 of one of the applications 3 to be processed in the region other than the region of the applications 3. When the determination is affirmative, the platform section 13 obtains the copy of the end user license agreement 321 in step S907. On the other hand, when the determination is negative, the platform section 13 updates the license agreement result 1005 included in the installation management table 1000 with information representing irrelevance in step S910. When the application package 6 stores the copy, the platform section 13 transmits the obtained end user license agreement 321 to the external interface 125 in step S909. Then, the platform section 13 receives information representing that the user accepts the notified end user license agreement 321 or information representing that the user does not accept the notified end user license agreement 321 from the user through the external interface 125 in step S909. When the user accepts the end user license agreement 321, the license agreement result 1005 included in the installation management table 1000 is updated with the information representing the acceptance. After the update, the application to be processed is installed through the operations of step S912, step S913, and step S915. On the other hand, when the user does not accept the end user license agreement 321, the platform section 13 prompts the user to determine whether the installation process is to be continued through the external interface 125 in step S922. When it is determined that the installation process is to be continued, the platform section 13 updates the license agreement result 1005 included in the installation management table 1000 with the information representing the disagreement in step S910. On the other hand, when it is determined that the installation process is not to be continued, the installation process is interrupted in step S931.

Then, the platform section 13 repeatedly performs the operations described above on only applications 3, among all the applications 3, in which "the installation-requirement checking results 1004 thereof correspond to the information representing that the installation is acceptable" in step S911. Thereafter, the platform section 13 performs operations described below on applications 3, among all the applications 3 registered in the installation management table 1000, in which "the installation-requirement checking results 1004 thereof correspond to the information representing that the installation is acceptable" and "the license agreement results 1005 thereof correspond to information representing the irrelevance or information representing the acceptance".

In step S913, the platform section 13 decrypts one of the encrypted applications 3. In step S914, the application program 322 included in the application 3 is installed. The operations are repeatedly performed until the application programs 322 included in all the applications 3 to be processed are installed in step S915, and then, the installation process is terminated.

The operation in step S914 will be described in detail hereinafter.

First, in step S914, the application program included in one of "the applications 3 in which the license agreement results 1005 thereof are updated with the information representing the acceptance in step S910" is installed. Note that application programs included in "applications in which the license agreement results 1005 thereof are not updated with the information representing the acceptance in step S910" are not installed.

Furthermore, note that the license agreement results 1005 obtained by decrypting the plurality of applications 3 in step S913 are ignored in step S914. This is because, as for the license agreements, the copies of the end user license agreements 321 have been checked in step S910 and step S911.

### Method for Checking Installation Requirements

A method for checking the installation requirements in the installation process performed by the platform section 13 will now be described.

The platform section 13 checks the installation requirements by comparing information defined by the application definition 311, information on the platform section 13, and information on the image processing device 12 with one another. In particular, the installation-accepting platform 44 and the expected consumed resource size 45 defined in the application definition 311 are used.

Assuming that a version of a platform program is a second version and a remaining size of the indirect storage unit 123 of the image processing device 12 is 100MB, and furthermore, assuming that a unique ID is "#####0000000000" and an unique ID of a provided function represents that "a version of a printing function is a first version and a display size of the user interface 124 corresponds to SVGA (Super Video Graphic Array)", a determination is made as follows.

The platform section 13 determines that the installation is not acceptable when a version of the platform program of the installation-accepting platform 44 to which one of the applications 3 is to be installed is the first version. That is, the determination is made in accordance with whether the platform program corresponds to a version of a platform to which the application 3 can be installed.

Furthermore, the platform section 13 determines that the installation is not acceptable when the expected consumed resource size 45 of the application 3 which is a size of a region in the indirect storage unit 123 to be consumed by the application 3 is 120 MB. That is, the determination is made in accordance with whether the device has remaining resources equal to or larger than the resources to be consumed by the application 3.

The platform section 13 determines that the installation is not acceptable when the unique ID of the device including the installation-accepting platform 44 in which the application 3 can be installed is "#####0000000000". That is, the determination is made in accordance with whether the unique ID corresponds to a unique ID for a device to which the applications 3 can be installed.

Furthermore, the platform section 13 determines that the installation is not acceptable when the unique ID of the function of the device of the installation-accepting platform 44 to which the application 3 can be installed represents a "second version of a printing function". That is, the determination is made in accordance with whether the device has a function for the installation.

As described above, the platform section 13 determines whether the installation is acceptable by comparing the information defined in the application definition 311 with the information on the device.

Furthermore, the application package 6 is not encrypted in this exemplary embodiment. However, as with the applications 3, the application package 6 may include an encrypted region which stores the plurality of application license agreements (621 to 623) and the plurality of encrypted applications (611 to 613). In this case, it is apparent that the copies of the end user license agreements are encrypted in step S807 and step S808 by the application package generator 24. Similarly, the plurality of encrypted applications 3 are encrypted again in step S807 and step S808 by the application package generator 24. That is, the applications 3 are encrypted twice. Accordingly, the end user license agreements are prevented from being tampered by storing the applications 3 encrypted twice in the encrypted region.

Note that when the encryption is performed in step S807 and step S808, information (a key, for example) used for decryption is stored in the package license 7 obtained in step S801.

As described above, according to the first exemplary embodiment, when an application package is installed, an operation of checking installation requirements, an operation of checking a license, and an operation of accepting an end user license agreement can be collectively performed in the first stage of the installation process. In this way, the installation process is prevented from being complicated due to necessity of an operation of inputting an instruction representing an acceptance of the end user license agreement and an instruction representing a continuance of the installation process, for example during the installation process.

### Second Exemplary Embodiment

In a second exemplary embodiment, descriptions of portions of a configuration the same as those of the configuration of the first exemplary embodiment and descriptions of components the same as those of the first exemplary embodiment are omitted. Note that reference numerals the same as those of the first exemplary embodiment are used for the portions of the configuration the same as those of the configuration of the first exemplary embodiment and the components the same as those of the first exemplary embodiment.

Note that some points of the second exemplary embodiment which are considerably different from the first exemplary embodiment will be described hereinafter. The second exemplary embodiment is different from the first exemplary embodiment in that an application package of the second exemplary embodiment includes an application package definition (refer to Fig. 11). The application package of the first exemplary embodiment does not include an application package definition (refer to Fig. 6).

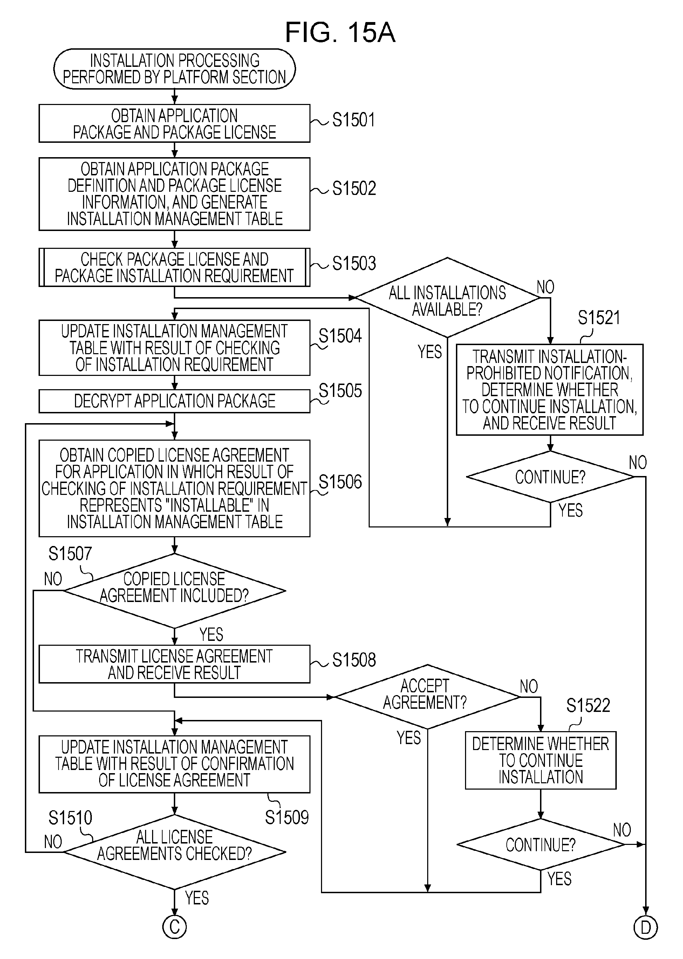

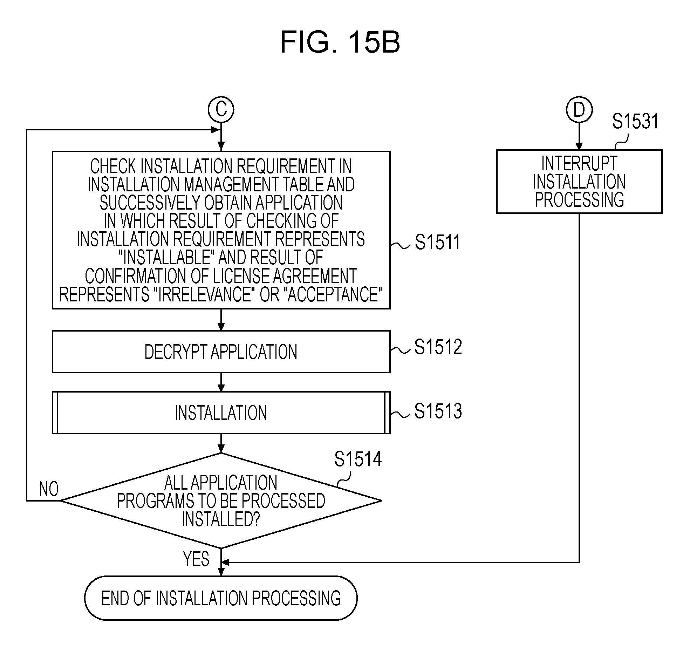

Therefore, in the second exemplary embodiment, checking of individual application definitions (refer to a rhombic shape located between step S904 and step S921 in Figs. 9A and 9B) is not required, and only checking of the application package definition is required (refer to a rhombic shape located between step S1503 and step S1521 in Fig. 15).

Furthermore, in the second exemplary embodiment, when the application package including the application package definition is generated, calculations (additions and multiplications) are performed in accordance with types of information included in the application definitions. Such calculations are not referred to in the first exemplary embodiment in which an application package definition is not generated.

### Application Package 1100

Fig. 11 is a block diagram illustrating a configuration of an application package 1100 according to the second exemplary embodiment of the present invention.

The application package 1100 is generated by an application package generator 24, which will be described hereinafter. The application package 1100 includes an unencrypted region 1101 and an encrypted region 1102. An application package definition 1103, which will be described hereinafter, is stored in a special directory (a directory named "MANIFEST") in the unencrypted region 1101. Furthermore, a plurality of application license agreements 1121 to 1123 corresponding to a plurality of applications 1111 to 1113 are stored in the encrypted region 1102.

The encrypted region 1102 is encrypted in any method as long as the encrypted region 1102 is decrypted only when a package license, which will be described hereinafter, is valid. That is, the valid license includes information (a key, for example) used to decrypt the encrypted region 1102.

### Application Package Definition

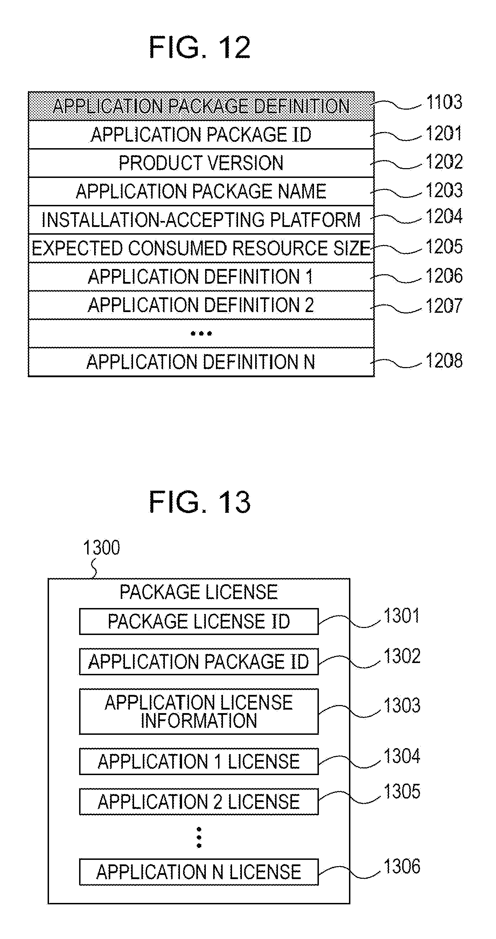

Fig. 12 shows a list illustrating a configuration of the application package definition 1103 according to the second exemplary embodiment of the present invention.

The application package definition 1103 includes an application package ID 1201, a product version 1202, an application package name 1203, an installation-accepting platform 1204, and an expected consumed resource size 1205. The application package definition 1103 further includes application definitions 1206 to 1208 which are application definitions of all applications 3 included in the application package 1100.

The application ID 1201 is an identifier used to uniquely identify the application package 1100 among a plurality of application packages. When the product version 1202 is used in combination with the application package ID 1201, a version of the application package 1100 can be specified. The application name 1203 is a character string representing an application name.

The installation-accepting platform 1204 represents a platform program which accepts installations of all the applications 3 included in the application package 1100. The installation-accepting platform 1204 represents a type and a version of the platform program, a unique ID of a device, and an ID representing a function which should be included in the platform program. In the expected consumed resource size 1205, a resource size required when all the applications 3 are installed or after all the applications 3 are installed is defined. Examples of the expected consumed resource size 45 include a size of an indirect storage unit 123 to be consumed and a size of a direct storage unit 122 to be consumed.

### Package License 1300

Fig. 13 is a block diagram illustrating a configuration of a package license 1300 according to the second exemplary embodiment of the present invention.

The package license 1300 is obtained by packaging a plurality of licenses (1304, 1305, and 1306, for example) generated using a package license generator 23. The package license 1300 includes a package license ID 1301, an application package ID 1302, package license information 1303, and the plurality of licenses 1304 to 1306.

The package license ID 1301 is an unique ID used to identify the package license 1300. The application package ID 1302 stores information on the application package ID 1201 of the application package 1100 to which a license has been assigned. The package license information 1303 stores a definition of the package license 1300 and information used to decrypt the encrypted region 1102 of the application package 1100, for example. The definition as a package license includes an expiration date of the package license 1300 and the number of times in which the license can be assigned.

### The Process of Generating Application Package

Referring now to a flowchart of Fig. 14, the process of generating the application package 1100 (step S1402 to step S1410) performed by the application package generator 24 and operations in step S1401 and step S1411 will be described.

The application package generator 24 receives the following items from the package license generator 23 in step S1401: a plurality of applications 3 to be packaged and the package license 1300 including a plurality of licenses 5 corresponding to the applications 3.

The application package generator 24 decrypts the received applications 3 in step S1402.

Then, the application package generator 24 selects one of the decrypted applications 3, and determines whether the selected application 3 includes an end user license agreement 321 in step S1403. When the determination is affirmative, the process proceeds to step S1404. Note that the end user license agreement 321 is stored in a special directory (such as a directory named "EULA") in the application 3, and therefore, the determination as to whether the selected application 3 includes the end user license agreement 321 is executed by searching the special directory for the end user license agreement 321 using the application package generator 24. A style of a file name of the end user license agreement 321 is preferably determined.

Then, the application package generator 24 copies the end user license agreement 321 included in the decrypted application 3 in step S1404. The application package generator 24 assigns an application ID 41 serving as an identifier used to uniquely specify the end user license agreement 321 to the file name of a copy of the end user license agreement 321 in step S805. The application ID 41 is used to specify the original application 3. Furthermore, the application 3 may include a plurality of the end user license agreements 321 (for example, in a case where the application 3 is compatible with various languages). In this case, all the end user license agreements 321 are copied, and IDs are assigned to all copies of the end user license agreements 321.

Subsequently, the application package generator 24 obtains the application definition 311 included in the application 3 in step S1406.

The application package generator 24 performs the operations described above on all the applications 3 received in step S1401. Thereafter, in step S1408, the application package generator 24 generates the application package definition 1103 in accordance with all the application definitions 311, which will be described hereinafter.

Then, the application package generator 24 performs an operation described below in step S1409. That is, all the applications 3 which have not yet been subjected to the decryption operation in step S1402, the copies of the end user license agreements 321 which were obtained in step S1404 and to which the IDs were assigned in step S1405, and the application package definition 1103 generated in step S1408 are packaged. In this way, the application package 1100 is obtained.

Then, the application package generator 24 transmits the generated application package 1100 and the package license 1300 to a transmission unit 22.

Note that, in step S1402 and step S1409, the application package generator 24 extracts the end user license agreements 321 from the corresponding encrypted applications 3.

Furthermore, in step S1406, step S1408, and step S1409, the application package generator 24 calculates the application definitions 1206 to 1208 included in the corresponding applications 3 so as to generate the single application package definition 1103.

Furthermore, the application package generator 24 generates the application package 1100 including the extracted end user license agreements 321, the generated application package definition 1103, and the applications 3.

In other words, in step S1402 and step S1409, the application package generator 24 generates the application package 1100 including the end user license agreements 321 of the encrypted applications 3 in regions which are different from regions including the applications 3 which have not yet been decrypted.

Furthermore, in step S1406, step S1408, and step S1409, the application package generator 24 generates an application package 1100 including the application package definition 1103 in regions which are different from regions of the encrypted applications 3 which have not yet been decrypted. Note that, as described above, the application package definition 1103 is obtained by calculating the application definitions 1206 to 1208 defined for the individual applications 3.

Note that, in this exemplary embodiment, in order to identify the applications 3 which store originals of the copied end user license agreements 321, a method for assigning the application IDs 41 of the applications 3 to file names of the end user license agreements 321 is described. However, other methods may be employed as long as the applications 3 which store originals of the copied end user license agreements 321 are identified. For example, a method for generating a table listing the associations between the applications 3 and the copies of the end user license agreement 321 and storing the table in the application package definition 1103 of the application package 1100 may be employed.

### Method for Generating Application Package Definition

A method for generating the application package definition 1103 performed by the application package generator 24 will be described.

The application package generator 24 generates the application package definition 1103 by calculating information items defined in the application definition 311. In particular, among the information items defined in the application definition 311, information on the installation-accepting platform 1202 and information on the expected consumed resource size 1205 are calculated.

For example, it is assumed that an application definition 311 of an application 3A is defined as follows: a version of an installation-accepting platform is a second version, a size of a region in an indirect storage unit 123 which is to be consumed is 100 MB, a unique ID of an installation-accepting device is "#####0000000000, ####0000000001", a unique ID of a required function represents that "a printing function is a second version and a display size of a user interface 124 corresponds to SVGA or a VGA". Note that the unique ID "#####0000000000, ####0000000001" means "#####0000000000 or ####0000000001".

On the other hand, it is assumed that an application definition 311 of an application 3B is defined as follows: a version of an installation-accepting platform is a first or second version, a size of a region in an indirect storage unit 123 which is to be consumed is 120 MB, a unique ID of the installation-accepting device is "#####0000000000", and a unique ID of a required function represents "a version of a printing function is a first version".

In this case, an application package definition 1103 is generated as described below.

First, it is determined whether an addition or a multiplication is used in accordance with types of the information items included in application definitions, and a calculation is performed.

Specifically, it is determined that an addition is used for the version and the size of the indirect storage unit of the installation-accepting device. On the other hand, it is determined that a multiplication is used for the unique IDs of the installation-accepting device and the unique IDs of the function required for installation.

A version of the platform program capable of accepting installations of all the applications included in the application package is the second version. This is calculated using a logical multiplication.

The size of the indirect storage unit 123 which allows all the applications included in the application package to be installed is 220 MB or more. This is calculated using an addition of numeric values, and the following expression is attained: 220 MB = 120 MB + 100 MB.

In addition, the unique ID of the installation-accepting device which allows all the applications included in the application package to be installed is "#####0000000000". This is also calculated using a logical multiplication (simple multiplication). That is, the unique ID "#####0000000000" is obtained by performing the logical multiplication (multiplication) using the unique ID "#####0000000000" and the unique ID "#####0000000000, ####0000000001".

The unique ID of the function required for installing all the applications included in the application package represents "a version of a printing function is a second version and the display size of the user interface 124 is SVGA or VGA". This is calculated using a logical multiplication.

As described above, the application package generator 24 generates the application package definition 1103 by calculating the individual information items defined in the application definition 311 using an addition or a multiplication (logic multiplication).

### The Process of Installing Application Package 1100

Referring to a flowchart of Fig. 15, the process of installing the application package 1100 performed by a platform section 13 will be described.

Note that, in this exemplary embodiment, the installation process includes an installation of application programs and processing performed along with the installation. Specifically, an operation of step S1501 to an operation of step S1514 are included in the installation process, and more specifically, the installation is performed in step S1513. That is, the installation of the application programs is performed in the process of installing applications performed in step S1501 to step S1514.

The platform section 13 receives the application package 1100 and the package license 1300 from an external interface 125 in step S1501.

Then, the platform section 13 performs the process described below in step S902. The platform section 13 receives the application package definition 1103 included in the application package 1100 and the package license information 1303 included in the package license 1300. Then, the platform section 13 generates an installation management table 1000 in accordance with information such as the obtained application package definition 1103 and the obtained package license information 1303. Specifically, the platform section 13 generates the installation management table 1000 which stores information (information such as the application definitions 311 and the licenses 5) other than an installation-requirement checking result 1004 and a license agreement result 1005 included in the installation management table 1000.

Then, the platform section 13 performs the process of checking the package license 1300 and installation requirements, which will be described hereinafter, in accordance with the information items in the application package definition 1103 and the package license information 1303 in step S1503. As results of the process of checking the package license 1300 and the installation requirements, when it is determined that the installation is acceptable, the installation-requirement checking result 1004 included in the installation management table 1000 is updated with information representing that the installation is acceptable in step S1504. On the other hand, when at least one of the results of the process of checking the installation requirements represents that the installation is not acceptable, the platform section 13 notifies the external interface 125 of information representing that the installation is not acceptable, and requests an instruction from the user through the external interface 125 in step S1521. Thereafter, the platform section 13 checks the instruction input by the user transmitted through the external interface 125 (that is, the platform section 13 determines whether the installation process is to be continued) in step S1521. When it is determined that the installation process is to be continued, the platform section 13 updates the installation-requirement checking result 1004 which is for an application which cannot be installed and which is included in the installation management table 1000 with the information representing that the installation is not acceptable in step S1504. On the other hand, when it is determined that the installation process is not to be continued, the installation process is interrupted in step S1531.

In step S1505, the platform section 13 decrypts the application package 1100.

Subsequently, the platform section 13 performs operations described below on only applications, among the applications registered in the generated installation management table 1000, which correspond to the installation-requirement checking result 1004 representing that the installation is acceptable.

The platform section 13 determines whether the application package 1100 stores a copy of the end user license agreement 321 of one of the applications 3 to be processed in an area other than the applications 3. When the determination is affirmative, the platform section 13 obtains the copy of the end user license agreement 321 in step S1506. On the other hand, when the determination is negative, the platform section 13 updates the license agreement result 1005 included in the installation management table 1000 with information representing irrelevance in step S1509. When the application package 1100 stores the copy, the platform section 13 transmits the obtained end user license agreement 321 to the external interface 125 in step S1508. Then, the platform section 13 receives information representing that the user accepts the notified end user license agreement 321 or information representing that the user does not accept the notified end user license agreement 321 from the user through the external interface 125 in step S1508. When the user accepts the end user license agreement 321, the license agreement result 1005 included in the installation management table 1000 is updated with the information representing that the user accepts the installation of all the applications 3 in step S1509. That is, when the information representing that the user accepts the end user license agreement 321 is obtained through the external interface 125, the license agreement result 1005 is updated by the information representing the acceptance. After the update, the application to be processed is installed through the operations of step S1511, step S1512, and step S1514.

On the other hand, when receiving the information representing that the user does not accept the end user license agreement 321, the platform section 13 prompts the user to determine whether the installation process is to be continued through the external interface 125 in step S1522. When it is determined that the installation process is to be continued, the platform section 13 updates the license agreement result 1005 included in the installation management table 1000 with the information representing the disagreement in step S1509. On the other hand, when it is determined that the installation process is not to be continued, the installation process is interrupted in step S1531.

Then, the platform section 13 repeatedly performs the operations described above on only applications, among all the applications 3 registered in the installation management table 1000, in which "the installation-requirement checking results 1004 thereof correspond to the information representing that the installation is acceptable" in step S1510.

Thereafter, the platform section 13 performs operations described below on applications 3, among all the applications 3 registered in the installation management table 1000, in which "the installation-requirement checking results 1004 thereof correspond to the information representing that the installation is acceptable" and "the license agreement results 1005 thereof correspond to information representing irrelevance or information representing the acceptance".

In step S1512, the platform section 13 decrypts one of the encrypted applications 3. In step S1513, an application program 322 included in the application 3 is installed. The operations are repeatedly performed until the application programs 322 included in all the applications 3 to be processed are installed in step S1514, and then, the installation process is terminated.

The operation in step S1513 will be described in detail hereinafter.

First, in step S1513, the application program included in one of "the applications in which the license agreement results 1005 thereof are updated with the information representing the acceptance in step S1509" is installed. Note that application programs included in "applications in which the license agreement results 1005 thereof are not updated with the information representing the acceptance in step S1509" are not installed.

Furthermore, note that the license agreement results 1005 obtained by decrypting the plurality of applications 3 in step S1512 are ignored in step S1513. This is because, as for the license agreement, the copies of the end user license agreements 321 have been checked in step S1509 and step S1510.

### Method for Checking Package Installation Requirements

A method for checking the package installation requirements in the installation process performed by the platform section 13 will now be described.

The platform section 13 checks the installation requirements by comparing information on the application package definition 1103, information on the platform section 13, and information on an image processing device 12 with one another. In particular, the installation-accepting platform 1204 and the expected consumed resource size 1205 defined in the application package definition 1103 are used.

Assuming that a version of a platform program is a second version and a remaining size of the indirect storage unit 123 of the image processing device 12 is 100MB, and furthermore, assuming that a unique ID is "#####0000000000" and an unique ID of a function provided in a device represents that "a version of a printing function is a first version and a version of a scanning function is a first version or a second version, a determination is made as described below.

The platform section 13 determines that all the applications 3 included in the package license 1300 cannot be installed when a version of the platform program of the installation-accepting platform 1204 to which the application package 1100 is to be installed is the first version. That is, the determination is made in accordance with whether the version of the platform program corresponds to a version of a platform to which the application 3 can be installed.

Furthermore, the platform section 13 determines that the applications 3 included in the package license 1300 are not installed when the expected consumed resource size 1205 of the application 3 which is a size of a region in the indirect storage unit 123 to be consumed by the application 3 is 120 MB. That is, the determination is made in accordance with whether the device has the remaining resources equal to or larger than the resources to be consumed by the application 3.

The platform section 13 determines that the applications 3 included in the package license 1300 are not installed when the unique ID of the device including application package 1100 is "#####0000000001". That is, the determination is made in accordance with whether the unique ID corresponds to a unique ID for a device to which the applications 3 can be installed.

Furthermore, the platform section 13 determines that the applications 3 are not installed when the unique ID of the function of the application package 1100 represents a "second version of a printing function". That is, the determination is made in accordance with whether the device has a function for the installation.

Furthermore, the platform section 13 performs an operation described below when it is determined that the applications 3 included in the application package 1100 cannot be installed. That is, it is determined whether the applications 3 included in the application package 1100 can be individually installed in accordance with the application definition 311 included in the application package definition 1103.

As described above, the platform section 13 determines whether the installation is acceptable by comparing the information defined in the application package definition 1103 with the information on the device.

As described above, according to the second exemplary embodiment, when an application package is installed, an operation of checking installation requirements, an operation of checking licenses, and an operation of accepting an end user license agreement can be collectively performed in the first stage of the installation process. Furthermore, since an application package definition and package license information are generated, performance of the operation of checking the installation requirements and performance of the operation of checking the licenses are improved. In this way, the installation process is prevented from being complicated due to necessity of an operation of inputting an instruction representing an acceptance of the end user license agreement and an instruction representing a continuance of the installation process, for example, during the installation process. Accordingly, performance of the installation process is improved.

According to the foregoing exemplary embodiments, the end user license agreements included in the plurality of encrypted applications are extracted from the applications. Accordingly, acceptance of the end user license agreements are obtained from the user without decrypting the plurality of encrypted applications. That is, the acceptances for the end user license agreements can be obtained from the user in an early stage, and accordingly, the installation process is smoothly performed.

Consequently, a notification requesting an input operation performed for an acceptance of an end user license agreement is not issued. Furthermore, such a notification is not issued in a middle stage (or a last stage) of the installation process. If such a notification requesting a user's operation is issued in the middle stage (or the last stage), the process becomes complicated. This is because, the user should wait until the middle stage (or the last stage) after the installation process is started in order to perform an operation.

Effects obtained when (1) a program which causes a computer to perform the operations in the flowcharts described above and (2) a computer readable storage medium storing the program are employed are the same as effects obtained when (3) a device which executes the operations of the flowcharts described above and (4) a method for causing a device to execute the operations of the flowcharts described above are employed. Therefore, (1) the program and (2) the computer readable storage medium are included in the present invention, although descriptions of the (1) the program and (2) the computer readable storage medium are omitted.

As an example of "data which relates to a request for an operation of inputting an instruction by a user through an interface before an application program included in an application is installed", an end user license agreement and an application definition are described herein. However, they are merely examples. The flowcharts described herein are applicable to not only the end user license agreement and the application definition but also other "data which relates to a request for an operation of inputting an instruction by a user through an interface before an application program included in an application is installed".

Note that the end user license agreement is data used to request an agreement of the user through the interface before the application program included in the application is installed. Accordingly, the end user license agreement corresponds to the "data which relates to a request for an operation of inputting an instruction by a user through an interface before an application program included in an application is installed".

Furthermore, the application definition is used when it is determined whether a result of the installation requirement checking process represents that the installation is acceptable. When it is determined that the installation is not acceptable, an operation of inputting an instruction performed by the user is requested through the interface (S921 and S1521). Accordingly, the application definition is data required when it is determined whether the operation of inputting an instruction performed by the user is requested through the interface. Therefore, the application definition is also corresponds to the "data which relates to a request for an operation of inputting an instruction by a user through an interface before an application program included in an application is installed".

While the present invention has been described with reference to exemplary embodiments, it is to be understood that the invention is not limited to the disclosed exemplary embodiments. The scope of the following claims is to be accorded the broadest interpretation so as to encompass all modifications and equivalent structures and functions.

## Claims

1. An application packaging device comprising:
decrypting means (24) configured to individually decrypt a plurality of applications (3), each of which includes an end user license agreement (321);
copying means (24) configured to copy the end user license agreement (321) included in each decrypted application (3); and
packaging means (24) configured to package the copy of each end user license agreement (321) and the encrypted applications (3) so as to obtain an application package(6, 1100).

2. The application packaging device according to claim 1, wherein the application package generation means (24) is configured to generate an application package (6, 1100) in which the end user license agreements (321) from the decrypted applications (3) are included in a region of the application package (6, 1100) distinct from the region including the encrypted applications (3).

3. The application packaging device according to Claim 2,
wherein the application package generation means (24) also encrypts the copy of each end user license agreement (321).

4. The application packaging device according to Claim 2,
wherein the application package generation means (24) calculates application definitions (311) included in the decrypted applications (3), and generates an application package (1100) so that an application package definition (1103) obtained through the calculation is included in a region of the package (6, 1000) distinct from the region corresponding to the encrypted applications (3).

5. The application packaging device according to Claim 4,
wherein the application package generation means (24) determines whether addition or multiplication is used in accordance with types of information items included in the application definitions (311) included in the decrypted applications (3).

6. A device comprising:
obtaining means (13) configured to obtain end user license agreements (321) from a region of an application package (6, 1100) generated by the application packaging device according to Claim 2 before a plurality of encrypted applications (3) included in the application package (6, 1100) are decrypted, the region including the agreements being distinct from the region including the encrypted applications (3); and
installation means (13) configured to install the applications (3) when acceptance of each end user license agreement (321) is obtained from a user through an interface (125).

7. A device as claimed in claim 6, further comprising:
obtaining means (13) configured to obtain an application package definition (1103) from a region of an application package (1100) generated by the application packaging device according to Claim 4 before a plurality of encrypted applications (3) included in the application package (1100) are decrypted, the region being distinct from the region including the encrypted applications (3); and
determination means (13) configured to determine whether all of the applications (3) included in the application package (1100) are installable in accordance with the obtained application package definition (1103) before the encrypted applications (3) are decrypted.

8. The device of claim 6, arranged to generate an installation management table (1000) in accordance with information including the application definitions (311) and the licenses (5).

9. The device of claim 8, wherein the device is arranged to detect if agreement to each license (5) is obtained prior to making a determination as to whether all of the applications (3) included in the application package (1100) are installable in accordance with the obtained application package definition (1103).

10. The device of claim 6, wherein the device is arranged to ignore end user license agreements included in the encrypted applications.

11. A method for controlling an application packaging device, comprising:
individually decrypting a plurality of applications (3), each of which includes an end user license agreement (321);
copying each end user license agreement (321); and
packaging the copy of each end user license agreement (321) and the encrypted applications (3) so as to obtain an application package (6, 1100).

12. A method for controlling an application installation device, comprising:
obtaining end user license agreements (321) from a region of an application package (6, 1100) generated by the application packaging device according to Claim 2 before a plurality of encrypted applications (3) included in the application package (6, 1100) are decrypted, the region including the agreements being distinct from the region including the encrypted applications (3); and
installing the applications (3) when acceptance of each end user license agreement (321) is obtained from a user through an interface (125).
